(19) Europäisches Patentamt
European Patent Office
Office européen des brevets

(11) Veröffentlichungsnummer: **0 348 775 B1**

(12) # EUROPÄISCHE PATENTSCHRIFT

(45) Veröffentlichungstag der Patentschrift: **25.05.94**

(51) Int. Cl.$^5$: **C09B 67/20**, C09B 67/10, C09D 11/02

(21) Anmeldenummer: **89111067.8**

(22) Anmeldetag: **19.06.89**

(54) **Pastenförmige Pigmentpräparationen, Verfahren zu ihrer Herstellung und ihre Verwendung.**

(30) Priorität: **25.06.88 DE 3821507**

(43) Veröffentlichungstag der Anmeldung:
**03.01.90 Patentblatt 90/01**

(45) Bekanntmachung des Hinweises auf die Patenterteilung:
**25.05.94 Patentblatt 94/21**

(84) Benannte Vertragsstaaten:
**CH DE FR GB IT LI**

(56) Entgegenhaltungen:
**EP-A- 0 225 606**
**EP-A- 0 290 727**
**DE-A- 3 715 836**
**FR-A- 2 017 958**
**FR-A- 2 249 144**

(73) Patentinhaber: **HOECHST AKTIENGESELL-SCHAFT**

**D-65926 Frankfurt(DE)**

(72) Erfinder: **Bender, Albert, Dr.**
**Henry-Moisand-Strasse 16**
**D-6500 Mainz(DE)**
Erfinder: **Schneider, Manfred**
**Cuntzstrasse 1**
**D-6239 Eppstein/Taunus(DE)**
Erfinder: **Schunck, Rainer, Dr.**
**Behringstrasse 26**
**D-6233 Kelkheim (Taunus)(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft neue, wertvolle Arylpararosanilinsulfonsäure-Pigmentpräparationen, die sich besonders zur Herstellung von Druckfarben, insbesondere Buch- und Offsetdruckfarben, eignen.

Es ist allgemein bekannt, wäßrige Preßkuchen von Pigmenten aus der Reihe der Arylpararosanilinsulfonsäuren der Formel I

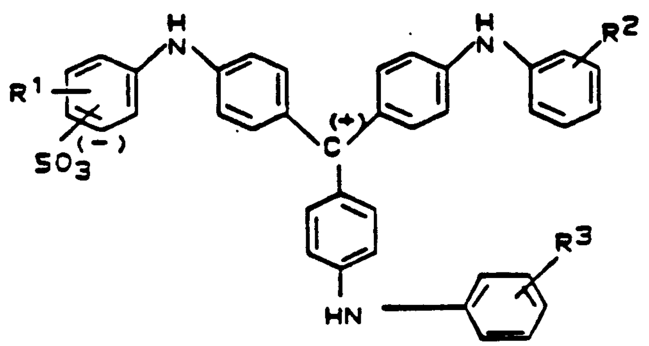

(I)

in welcher $R^1$, $R^2$ und $R^3$ unabhängig voneinander Wasserstoff, Halogen, wie Chlor oder Brom, $C_1$-$C_3$-Alkyl,$C_1$-$C_3$-Alkoxy oder Nitro bedeuten, einem Flushprozeß zu unterwerfen, wobei das Pigment in ein Bindemittel überführt und gleichzeitig weitgehend entwässert sowie konzentriert wird (siehe z. B. K. Winnacker, L. Küchler "Chemische Technologie", 3. Auflage, Bd. 4, Seiten 362, 375, 376 und 408 (1972)). Auf diese Weise werden Flushkonzentrate erhalten, welche das Pigment in gut dispergierter Form enthalten, sich leicht in einen Buch-oder Offsetdruckfirnis einarbeiten lassen und dabei farbstarke Buch- bzw. Offsetfarben ergeben.

Der Einsatz von Flushkonzentraten an Stelle von Pigmentpulvern zur Herstellung von Druckfarben ist bei Arylpararosanilinsulfonsäure-Pigmenten von besonderem Vorteil. Trocknet man nämlich die wäßrigen Pigmentpreßkuchen, wie es bei vielen anderen Pigmenten üblich ist, so bilden die genannten Arylpararosanilinsulfonsäurepigmente wegen ihrer ausgeprägten Polarität harte Agglomerate, die sich beim Anreiben auf einem Dreiwalzen-Stuhl durch normale mechanische Beanspruchung nicht mehr zerlegen lassen. Die schlechte Dispergierbarkeit dieser Pigmente wirkt sich auf die Farbstärke, Homogenität, den Glanz und die Transparenz der damit hergestellten Druckfarben ungünstig aus. Die getrockneten unpräparierten Arylpararosanilinsulfonsäure-Pigmente sind daher als solche für die Verwendung in Druckfarben unbrauchbar. Die geflushten Pigmente (Flushpasten) weisen diesen Nachteil bei geeigneter Wahl des Bindemittels nicht auf.

Die vorwiegend eingesetzten Bindemittel für den Flushprozeß von Arylpararosanilinsulfonsäure-Pigmenten bestehen aus einem Harzgemisch und hochsiedendem Mineralöl. Derartige Bindemittel sind in der DE-PS 2 354 225 (U.S.-Patent Nr. 3,950,288) beschrieben. Hierbei handelt es sich um Harzgemische in Mineralölen, wobei der Mineralölanteil zwischen 35-60 Gew.-% beträgt. Die Harzmischungen sind in ihrer Zusammensetzung so beschaffen, daß während des Knetvorganges beim Flushprozeß eine gute Pigmentbenetzung bewirkt wird. Allerdings dürfen die Benetzungseigenschaften dieser Harzmischung nicht so ausgeprägt sein, daß ein nennenswertes Emulgieren des bereits abgeschiedenen Wassers stattfindet, wodurch der Flushprozeß stark beeinträchtigt würde.

Weiterhin dürfen die Flushmittel praktisch keine wasserlöslichen oder wassermischbaren Bestandteile enthalten, da diese ebenfalls zu Störungen im Flushablauf führen würden oder ihn sogar ganz verhindern könnten.

Mit dem aus der DE-PS 2 354 225 bekannten Flushharz aus einem langöligen Alkydharz und einem Kohlenwasserstoffharz läßt sich das Flushverfahren mit guten Ergebnissen vor allem bei Verwendung von aromatenhaltigem Mineralöl durchführen. Allerdings ist das Flushen selbst dann mitunter recht unvollständig, so daß das Abziehen des Restwassers unter reduziertem Druck sehr lange dauern kann. Auch müssen an die Qualität der zu verarbeitenden Kohlenwasserstoffharze hohe Anforderungen gestellt werden. Die Verfügbarkeit der Ausgangskohlenwasserstoffe und die exakte Einhaltung in allen speziellen Kennzahlen beim Einsatz von Ausgangsstoffen verschiedener Provenienzen ist nicht immer gegeben, so daß unterschiedliche Ergebnisse hinsichtlich der Effektivität beim Flushen sowie der Verträglichkeiten und des Schönungsverhaltens der fertigen Druckfarben resultieren können.

Darüber hinaus erfordert der aus ökologischen Gründen stetig steigende Einsatz aromatenfreier oder aromatenarmer Mineralöle in Druckfarbenrezepturen hinsichtlich der Löslichkeit der Flushharze im Mineralöl und der Verträglichkeit der Rarze mit den Bindemitteln in Druckfarben genau abgestimmte Harzkombinationen. Insbesondere weisen aromatenarme Mineralöle schlechte Löseeigenschaften mit dem in der DE-PS 2 354 225 beschriebenen Kohlenwasserstoffharz auf. Um dieses Harz trotzdem in Lösung zu behalten, sind dann relativ hohe Anteile an Alkydharz, das hierbei auch als Lösungsvermittler dient, notwendig. Dadurch steigt jedoch der Anteil an trocknenden Ölen in der Flushpaste, was sich in der fertigen Druckfarbe mit verlängerten Trocknungszeiten bemerkbar macht. Bei den sehr schnell laufenden Druckmaschinen ist dies von Nachteil.

Aufgabe der vorliegenden Erfindung ist es, Flushpasten mit Arylpararosanilinsulfonsäurepigmenten bereitzustellen, welche als Flushbindemittel Harze bzw. Gemische davon ohne Kohlenwasserstoffharzanteil enthalten und welche die obengenannten Nachteile nicht aufweisen.

Für Flushverfahren wurden bereits die verschiedenartigsten Bindemittel vorgeschlagen. In der deutschen Patentschrift 17 69 912 und in der FR-A-2 017 958 sind Bindemittel unter anderem auf Basis von Naturharzestern erwähnt. Aus der EP-A-0 255 667 und der EP-A-0 225 606 sind Flushverfahren unter Verwendung von Alkydharzen bekannt. Für die Pigmente der obengenannten Formel (I) lassen sich jedoch weder die Naturharzester noch die Alkydharze analog den Verfahren zum Stand der Technik zur Herstellung von Flushpasten heranziehen. Bei beiden Bindemitteln kommt es nicht zur Wasserabspaltung.

Gegenstand der Erfindung sind Pigmentpräparationen, enthaltend im wesentlichen

a) Pigmente der genannten allgemeinen Formel (I),

b) Naturharzester auf Basis von unmodifizierten oder modifizierten Naturharzen und ein oder mehrwertigen Alkoholen mit 1 bis 20 C-Atomen

c) langölige Alkydharze mit einem Ölgehalt von 60 bis 90 Gew. - % und

d) Mineralöl.

Von besonderem Interesse sind erfindungsgemäße Pigmentpräparationen, die

a) bis zu 50 Gew.-% Pigmente,

b) Naturharzester auf Basis von unmodifiziertem, disproportioniertem oder hydriertem Kolophonium und 2- bis 6-wertigen Alkoholen mit 1 bis 10 C-Atomen

c) langölige Alkydharze mit einem Ölgehalt von 70 bis 85 Gew. - % und

d) Mineralöl mit einem Siedebereich zwischen 200 und 500 °C, vorzugsweise zwischen 240 und 450 °C,

enthalten, wobei das Gewichtsverhältnis von Naturharzester b) zu Alkydharz c) von 1:0,25 bis 1:2,5, vorzugsweise 1:0,35 bis 1:2, und das Gewichtsverhältnis der Summe der Harze b) + c) zum Mineralöl d) von 1:3 bis 1:0,5, vorzugsweise 1:2,7 bis 1:0,7 beträgt.

Eine erfindungsgemäße Pigmentpräparation kann jeweils ein oder mehrere Pigmente, Naturharzester, Alkydharze oder Mineralöle enthalten.

Die erfindungsgemäßen Pigmentpräparationen können auch noch andere übliche Zusätze oder Hilfsmittel enthalten, beispielsweise Konservierungsstoffe wie Fungizide oder Flushhilfsmittel.

Geeignete Naturharzester sind Ester von Naturharzsäuren, beispielsweise Ester von Abietinsäure, Dehydroabietinsäure, Dihydroabietinsäure, Tetrahydroabietinsäure, Lävopimarsäure, Dextropimarsäure, Isodextropimarsäure, Neoabietinsäure, Palustrinsäure, Pimarsäure und Isopimarsäure, wie sie in handelsüblichen Kolophoniumarten vorliegen. Bevorzugt sind Ester von Kolophonium, wie Ester von Balsamkolophonium, Wurzelharz und Tallharz, sowie Ester von disproportioniertem oder hydriertem Kolophonium. Aber auch andere Kolophoniumderivate, wie Ester von polymerisiertem und dimerisiertem Kolophonium und von Kolophonium-Addukten mit ungesättigten Mono- oder Dicarbonsäuren, beispielsweise Maleinsäureanhydridaddukten, sind verwendbar.

Als Alkohole zur Veresterung der Naturharzsäuren sind Mono-, Di- oder Polyalkohole mit 1 bis 20 C-Atomen sowie deren Gemische geeignet, beispielsweise niedere aliphatische Alkohole, wie Methanol, Ethanol, Propanol, Butanol, Isobutanol, Pentanol, Hexanol und Heptanol, Fettalkohole mit 8 bis 20 C-Atomen, Dialkohole, wie Ethylenglykol, Propylenglykol, Butylenglykol, Diethylenglykol, Triethylenglykolether und Neopentylglykolether und Polyalkohole, wie Glycerin, Trimethylolpropan, Pentaerythrit, Dipentaerythrit, Pentite und Hexite.

Bevorzugte Pigmentpräparationen enthalten Naturharzester, auf Basis von 2- bis 6-wertigen Alkoholen, insbesondere Alkohole aus der Gruppe Glycerin, Trimethylolpropan und Pentaerythrit.

Bevorzugte Alkydharze sind die in der deutschen Patentschrift 2 354 225 beschriebenen Mischalkydharze. Es ist jedoch auch möglich, solche einzusetzen, die nur trocknende oder halbtrocknende oder nicht trocknende Öle enthalten, beispielsweise handelsübliche Leinölalkydharze, wie (R)Alftalat AL 810 (81 % Ölgehalt) oder (R)Alftalat AL 766 (76 % Ölgehalt). Im allgemeinen können die langöligen Alkydharze der Komponente c) in üblicher Weise als öl- oder fettsäuremodifizierte Polyester hergestellt werden, wobei

vorzugsweise Iso- und Ortho-Phthalsäure sowie geringe Anteile an einer $\alpha,\beta$-ungesättigten Dicarbonsäure oder mehreren mit einem Gemisch aus Glycerin und Pentaerythrit und Ölen oder Fettsäuren oder Kombinationen davon stufenweise oder in einem Schritt umgesetzt werden.

Geeignete Öle zur Herstellung der langöligen Alkydharze sind beispielsweise Leinöl, Rizinusöl, Kokosöl, Rapsöl Rizinenöl, Sonnenblumenöl, Baumwollsaatöl, Sojaöl, Erdnußöl, Tallöl und Talgöl, vorzugsweise Leinöl oder Rizinusöl, sowie Kombinationen der genannten Öle. Sofern Fettsäuren zur Herstellung der langöligen Alkydharze eingesetzt werden, sind beispielsweise Fettsäuren und Fettsäuregemische geeignet, die durch Verseifung der vorstehend genannten Öle erhältlich sind. Weiterhin geeignet sind geradkettige oder verzweigte gesättigte Fettsäuren mit 7-10 C-Atomen, Fettsäuren aus der Verseifung von Fetten, insbesondere Rindertalgfett, Harzsäuren, Benzoesäure, p-tert-Butylbenzoesäure und Kombinationen der genannten Säuren.

Sowohl bei den unter Verwendung der obengenannten Öle hergestellten Alkydharzen als auch bei den unter Verwendung der obengenannten Fettsäuren hergestellten Alkydharzen wird ein "Ölgehalt" angegeben. Dieser sogenannte Ölgehalt ist definiert als der auf das Alkydharz bezogene Gewichtsanteil von in Triglyceride umgerechneten modifizierenden Ölen oder Fettsäuren, die bei der Herstellung des Alkydharzes verwendet werden.

Es empfiehlt sich, Ester mit einer Säurezahl unter 30 und Alkydharze mit einer Säurezahl unter 20 einzusetzen. Bevorzugt sind Ester mit einer Säurezahl unter 20 und Alkydharze mit einer Säurezahl unter 10. Höhere Säurezahlen sind in der Regel weniger vorteilhaft, da entsprechende Verbindungen zum Teil wasserlöslich sind und Emulgatorwirkung besitzen; der Flushprozeß wird dadurch normalerweise verlangsamt und läuft dann nur noch unvollständig ab. Darum sind auch solche Flushharzlösungen aus Naturharzestern, Alkydharz und Mineralöl bevorzugt, deren Säurezahl kleiner als 30, vorzugsweise kleiner als 20, insbesondere kleiner als 10 ist.

Die Naturharzester und Alkydharze werden nach üblichen Verfahren hergestellt. Solche Verfahren sind z.B. beschrieben in W.Sandermann, "Naturharze, Terpentinöl, Tallöl", Springer-Verlag Berlin/Göttingen/Heidelberg 1960 oder in D.H. Solomon "The Chemistry of Organic Film Formers", John Wiley & Sons, Inc., New York 1967.

Das verwendete Mineralöl kann aromatenhaltig, aromatenarm oder aromatenfrei sein. Vorzugsweise wird aromatenarmes oder aromatenfreies Mineralöl verwendet.

Die erfindungsgemäßen Pigmentpräparationen enthalten vorzugsweise 40 bis 45 Gew.-% Pigment und besitzen eine Viskosität im Bereich von 30 bis 70 Pascal•sec (Pa•s), gemessen mit einem Fallstabviskosimeter. Viskositäten der Flushpasten im Bereich von 30 bis 70 Pa•s haben sich in der Praxis weitgehend bewährt, da sie einerseits eine gute Handhabung der Flushpasten gewährleisten und andererseits mit den so eingestellten Pasten Druckfarben für den Offsetdruck hergestellt werden können, welche den anwendungstechnischen Anforderungen bezüglich Rheologie, Zügigkeit, Wasserverträglichkeit und Verdruckbarkeit entsprechen. Auch ist die erfindungsgemäß einzusetzende Flushharzlösung mit Mineralöl hinsichtlich der Viskosität in weiten Grenzen einstellbar, vorzugsweise im Viskositätsbereich von 300 bis 3000 mPa•s, vorzugsweise 400 bis 1500 mPa•s, insbesondere 500 bis 1000 mPa•s, ohne die hervorragenden Eigenschaften für den Flushprozeß negativ zu beeinflussen. Dies ist beispielsweise für die betriebliche Handhabung von großer Bedeutung.

Gegenstand der Erfindung ist weiterhin auch das Verfahren zur Herstellung der erfindungsgemäßen Pigmentpräparationen, die im wesentlichen die obengenannten Komponenten a) bis d) enthalten, durch Flushen der wäßrigen Preßkuchen der Pigmente der obengenannten allgemeinen Formel (I), dadurch gekennzeichnet, daß die wäßrigen Preßkuchen der Pigmente a) in Gegenwart einer Harzmischung aus mindestens einem Naturharzester b) und mindestens einem Alkydharz c) in Mineralöl d) geflusht werden.

In der Regel wird so verfahren, daß man die wasserfeuchten Preßkuchen in an sich bekannter Weise mit Hilfe von Doppelmuldenknetern üblicher Bauart stufenweise mit einer Lösung der unter b) und c) aufgeführten Harze in Mineralöl d) flusht und die dabei abgeschiedene Wassermenge abtrennt. Nach dem Flushen ist die Hauptmenge des Wassers, die in den wäßrigen Pigmentpreßkuchen enthalten war, abgeschieden. Die Entfernung des restlichen Wassers kann in üblicher Weise unter reduziertem Druck erfolgen.

Neben den Bestandteilen a) bis d) können weitere übliche Zusätze oder Hilfsmittel vor, während oder nach dem Flushprozeß zugesetzt und eingearbeitet werden.

Umfangreiche Versuche, ein analoges Flushen, jedoch unter Verwendung der einzelnen Harze b) oder c) durchzuführen, führten nicht zum Erfolg. In keinem Falle konnte eine Flushpaste erhalten werden. Umso erstaunlicher war die Beobachtung, daß durch Mischen der beiden Harze b) und c) in Mineralöl ein gutes Flush-Bindemittel hergestellt werden kann. Die erfindungsgemäßen Pigmentpräparationen haben so geringe Viskositäten, daß der Pigmentgehalt bei Bedarf bis auf 50 Gew.-% erhöht werden kann, wobei eine für die

Praxis geforderte Viskosität von 30 bis 100 Pa•s gewährleistet wird. Die eingestellte Viskosität der Flushpasten ändert sich bei Lagerung über 3 Tage bei 60 °C nur geringfügig. Die Flushpasten zeigen in praxisüblichen Mischungen mit den verschiedensten Schwarzdruckfarben nach Verdrucken im Offsetdruck hervorragendes Schönungsverhalten.

Gegenstand der Erfindung ist auch die Verwendung der erfindungsgemäßen Pigmentpräparationen zur Herstellung von Druckfarben. Die erfindungsgemäßen Pigmentpräparationen zeichnen sich durch hervorragende Eigenschaften aus, die sie insbesondere für die Herstellung von Buch- und Offsetdruckfarben geeignet erscheinen lassen. So haben die Pigmentpräparationen in der Regel eine Zügigkeit zwischen 8 bis 20, vorzugsweise 10 bis 16 Inkometerwerten, gemessen am Tackometer "Inkomat" der Firma Prüfbau (München), wie sie für in Buch- und Offsetdruckfarben einzusetzende Pigmentpräparate gefordert werden. Als Maß für Zügigkeit wird dabei das Drehmoment angegeben, das von einer mit der Präparation versehenen Walze auf eine nicht angetriebene, anliegende Walze aufgrund der Zügigkeit der Präparation übertragen wird (ein Inkometerwert entspricht 60 cm • pond, der Inkometerwert ist ein gerätebezogener Wert).

Die erfindungsgemäßen Pigmentpräparationen sind gut lagerfähig. Auch nach längerer Lagerung bei 50 bis 60 °C bleiben die Pigmentpräparationen viskositätsstabil im praxisorientierten Bereich von 30 bis 100 Pa•s.

Weiterhin zeigen die Pigmentpräparationen nur einen geringen Anstieg der Thixotropie. Die Thixotropie wird dabei zuerst an einer frisch hergestellten Präparation und dann an einer drei Tage bei 60 °C im Wärmeschrank gelagerten Probe bestimmt. Als Maß für die Thixotropie gilt dabei die Kraft, die aufgebracht werden muß, um eine Kugel von 6 mm Durchmesser mit einer Eintauchgeschwindigkeit von 15 mm/Min. in der Pigmentpräparation zu bewegen. Bei der beschriebenen Lagerung der erfindungsgemäßen Pigmentpräparationen steigt die Thixotropie nur in dem Rahmen an, wie sie bei Flushpasten mit Hartharzen üblich ist.

Die erfindungsgemäßen Pigmentpräparationen zeichnen sich durch sehr breite Verträglichkeit mit den für die verschiedenen Druckverfahren, wie Hochdruck und Flachdruck, in der Einfarben- oder Mehrfarbendrucktechnik in Frage kommenden, gebräuchlichen Bindemittel- bzw. Druckfarbensystemen aus. Sie lassen sich beispielsweise leicht in Bindemittelsysteme für Buchdruckfarben, Offsetdruckfarben, Heatset-Offsetdruckfarben oder Zeitungsrotationsfarben einarbeiten. Die mit den erfindungsgemäßen Präparationen pigmentierten Druckfarben sind einwandfrei zu verdrucken und liefern farbstarke glänzende Drucke. Die erfindungsgemäßen Pigmentpräparationen eignen sich auch in Mischung mit Schwarzpasten als Druckfarbe und weisen im Druck einen guten Glanz- und Schönungseffekt auf. Die Pigmentpräparationen sind auch geeignet zur Herstellung von Druckfarben für Durchschreibepapiere und Farbbänder.

In den folgenden Beispielen beziehen sich Teile und Prozentangaben auf das Gewicht, sofern nichts anderes angegeben ist. Für die Struktur der eingesetzten Pigmente ist in den Beispielen vereinzelt eine "idealisierte Formel" angegeben. In diesen Fällen enthält das eingesetzte Pigment ein Gemisch aus Triarylpararosanilinmonosulfonsäuren, die gemeinsam bei der Sulfonierung des entsprechenden Triarylpararosanilins entstehen und im Unterschied zueinander die Sulfogruppe an einem der strukturell verschiedenen endständigen Arylreste gebunden haben.

**Beispiel 1**

240 Teile eines Pigments auf der Basis von Triphenylpararosanilinmonosulfonsäure der idealisierten Formel II

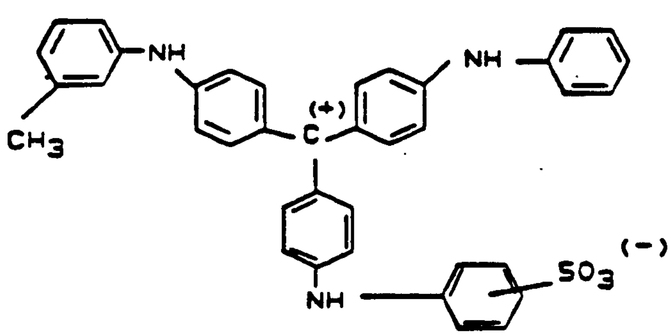

(II)

werden als wäßriger Preßkuchen (936 Teile) mit 25,6 Gew.-% Pigmentgehalt in einem Kneter mit sigmaförmigen Kneterschaufeln mit 195 Teilen einer ca. 55 %igen Flushharzlösung geflusht, wobei die Flushharzlösung aus 3 Teilen Kolophoniumpentaerythritester, 3 Teilen von Mischalkydharz 2 aus der DE-PS 23 54 225 mit einem Ölgehalt von ca. 78 % und 5 Teilen eines Mineralöls mit einem Siedebereich von 240 bis 440 °C hergestellt worden ist. Die Säurezahl der Flushharzlösung beträgt 7 und deren Viskosität 900 mPa•s.

Man geht so vor, daß man zuerst 547 Teile des feuchten Preßkuchens mit 146 Teilen der 55 %igen Flushharzlösung verknetet und nach ca. 20 Minuten eine Wassermenge von 295 Teilen durch Kippen des Kneters abtrennt. Nach Zugabe von 230 Teilen des feuchten Preßkuchens und langsamem Eintropfen von 25 Teilen der Flushharzlösung werden im zweiten Flush-Vorgang 150 Teile Wasser abgeschieden. Nach dem Abtrennen des Wassers wird unter Zugabe der restlichen 159 Teile des Preßkuchens sowie unter Zutropfen von 24 Teilen Flushharzlösung ein dritter Flushvorgang durchgeführt. Insgesamt werden auf diese Weise 88 % (entsprechend 619 Teilen) des mit dem Preßkuchen eingesetzten Wassers abtrennt. Weiterhin wird während des Trocknens im Vakuum je nach Maßgabe der Knetkonsistenz Mineralöl des Siedebereichs 240 bis 440 °C oder entsprechend Flushharzlösung zugesetzt. Es resultiert eine blaue pastenförmige Pigmentpräparation mit einer Viskosität von 48 Pa•s und einem Pigmentgehalt von 42,8 %. Die Pigmentpräparation hat eine Zügigkeit von 13,4 bis 13,6 Inkometerwerten und ist damit hervorragend zum Einsatz in Druckfarben für Buchdruck- und Offsetdruckverfahren geeignet, wobei sie hervorragend geschönte Drucke ergeben.

Bei dreitägiger Lagerung bei 60 °C steigt die Thixotropie der Pigmentpräparation nur in dem Rahmen an, wie es bei Flushpasten mit Hartharz-Firnissen üblich ist, d.h. nicht über eine Viskosität von 200 mPa•s.

Die Pigmentpräparation kann durch einfaches Einarbeiten mit einem Dissolver oder auf einem Dreiwalzenstuhl mit anderen Druckfarben gemischt werden. Beispielsweise erhält man durch Mischen von einem Teil der erfindungsgemäßen Pigmentpräparation mit vier Teilen einer Schwarzpaste aus 20 % Ruß, 75 % Firnis und 5 % Wachspaste (30 % Polyethylenwachs in Mineralöl) unter Zusatz von 1 % Firnistrockenstoff eine Druckfarbe, die beim Druck einen guten Glanz und Schönungseffekt aufweist.

**Beispiel 2**

240 Teile eines Triphenylpararosanilinsulfonsäurepigments der Formel III

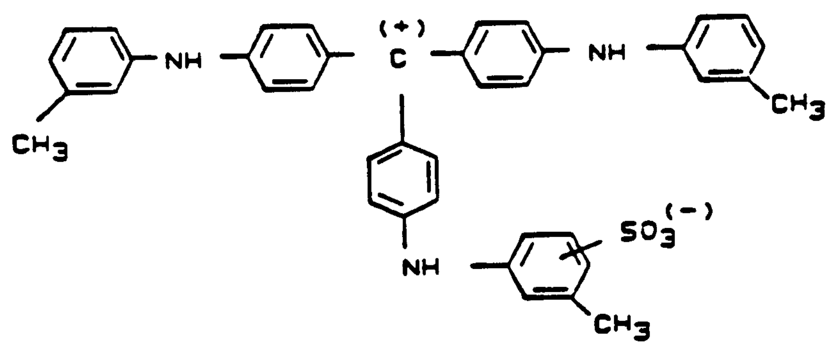

(III)

werden als wäßriger Preßkuchen (879 Teile) mit 27,3 % Pigmentgehalt wie unter Beispiel 1 geflusht. Es werden 91 % des mit dem Preßkuchen eingesetzten Wassers abgeschieden und dekantiert. Vor der Trocknung des Knetansatzes unter reduziertem Druck werden noch 20 Teile des ca. 55 %igen Flushharzes zugesetzt. Die Trocknung ist nach 4 Stunden abgeschlossen. Nach Einstellen der Paste mit Flushharz auf eine Viskosität von 39 Pa•s resultiert eine Paste mit einem Pigmentgehalt von 44,3 %. Die Pigmentpräparation hat eine Zügigkeit von 12,3 bis 13,7. Sie ist hervorragend zum Einsatz in Druckfarben für den Buch- oder Offsetdruck geeignet. Glanz- und Schönungsverhalten sind sehr gut.

**Vergleichsbeispiel A**

In einem Kneter mit sigmaförmigen Kneterschaufeln werden 120 Teile eines Pigments der idealisierten Formel II (siehe Beispiel 1) als wäßriger Preßkuchen (469 Teile) mit 25,6 % Pigmentgehalt vorgelegt und homogen verknetet. Durch portionsweise Zugabe von Kolophoniumpentaerythritester (Säurezahl 12) in etwa 65 %iger Lösung in Mineralöl mit einem Siedebereich von 240 bis 440 °C, wird versucht, ein Flushen herbeizuführen. Auch nach 5stündigem Verkneten bei steigendem Bindemittelgehalt bis zu einem Verhältnis

von Pigment zu Flushharzlösung im Kneter von 1:2,0 tritt keine Wasserabspaltung ein.

**Vergleichsbeispiel B**

Verfährt man wie im Vergleichsbeispiel A beschrieben, setzt jedoch als Pigment ein Pigment der idealisierten Formel III (siehe Beispiel 2) ein, so scheidet sich nach ca. einer Stunde Kneten bei einem Verhältnis von Pigment zu Flushharzlösung von 1 : 1,3 Wasser in einer Menge von 28 Teilen ab (ca. 8 %). Bei einem nachgeschalteten 2. und 3. Flushvorgang läßt sich keine weitere Wasserabspaltung mehr erreichen.

**Vergleichsbeispiel C**

Man verfährt wie in Vergleichsbeispiel A, setzt jedoch als Flushbindemittel das in der DE-PS 23 54 225 als Alkydharz 1 beschriebene Harz als ca. 70 %ige Lösung in Mineralöl des Siedebereichs 260 bis 290 °C ein. Auch nach 5 Stunden Kneten ist ein Abtrennen von Wasser nicht feststellbar.

**Vergleichsbeispiel D**

Man verfährt wie in Vergleichsbeispiel C, setzt jedoch als Flushbindemittel das Alkydharz 2 aus der DE-PS 23 54 225 ein. Auch mit diesem Harz kommt es nicht zu einer nennenswerten Wasserabspaltung beim Knetvorgang.

Wiederholt man diesen Versuch unter Verwendung des Pigments der Formel III (siehe Beispiel 2), ist das gleiche negative Resultat festzustellen.

**Vergleichsbeispiel E**

Man verfährt analog Beispiel 1, setzt jedoch als Flushharzlösung das Bindemittel E aus der DE-PS 23 54 225 ein. Nach 35 Minuten Kneten ist eine Wasserabspaltung festzustellen. Nach 3 Flushvorgängen beträgt die abgespaltene Wassermenge etwa 73 %. Durch den verbleibenden hohen Wassergehalt der Flushpaste dauert die analog Beispiel 1 durchgeführte Trocknung der Flushpaste unter reduziertem Druck ca. 2 Stunden länger als in Beispiel 1.

**Beispiel 3**

80 Teile eines Pigments der idealisierten Formel II (siehe Beispiel 1) in Form eines wasserfeuchten Preßkuchens mit einem Pigmentgehalt von 25,6 % (312,5 Teile) und 160 Teile des Pigments der idealisierten Formel III (siehe Beispiel 2) in Form eines wasserfeuchten Preßkuchens mit einem Pigmentgehalt von 28,1 % (569 Teile) werden vermischt und analog Beispiel 1 portionsweise geflusht. Als Flushbindemittel wird eine Mischung aus 3,4 Teilen Tallharzpentaerythritester, 1,0 Teilen von Mischalkydharz 2 aus der DE-PS 23 54 225 mit einem Ölgehalt von 81,5 % und 4,5 Teilen eines Mineralöls mit einem Siedebereich von 240 bis 440 °C verwendet. Die Flushharzlösung hat eine Säurezahl von 7 und eine Viskosität von 590 mPa•s. Die drei Flushvorgänge verlaufen äußerst zügig, wobei insgesamt 94 % des enthaltenen Wassers abgeschieden werden. Die in der Knetpaste verbleibende Wassermenge wird innerhalb von etwa 2 Stunden unter reduziertem Druck abgezogen. Nach Zugabe von insgesamt 270 Teilen der obengenannten Flushharzlösung resultiert eine äußerst farbstarke 47 %ige Paste mit einer Viskosität von 93 Pa•s. Die Zügigkeit beträgt 12,4 bis 12,8 Inkometerwerte. Gemischt mit einer Rußdruckfarbe, wie sie in Beispiel 1 beschrieben ist, erhält man eine Druckfarbe mit gutem Glanz- und Schönungsverhalten.

**Beispiel 4**

240 Teile eines Pigments der idealisierten Formel IV

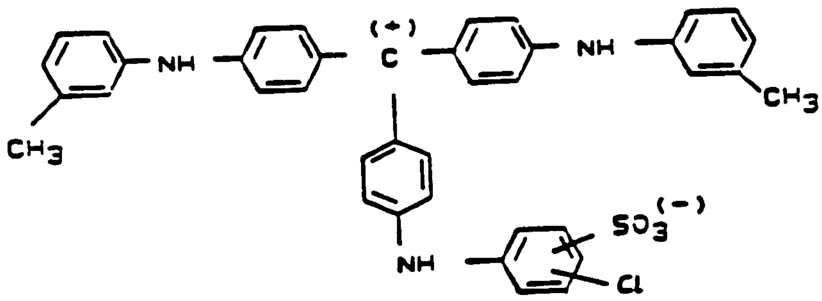

(IV)

in Form von 988 Teilen eines wasserfeuchten Preßkuchens mit einem Pigmentgehalt von 24,3 % werden analog Beispiel 1 in drei Arbeitsgängen geflusht. Als Flushbindemittel wird eine Mischung aus 4 Teilen Tallharzpentaerythritester, 1,5 Teilen von Mischalkydharz 2 aus der DE-PS 23 54 225 mit einem Ölgehalt von 78,5 % und 3,8 Teilen eines Mineralöls mit einem Siedebereich von 260 bis 290 °C eingesetzt. Das Bindemittel hat die Säurezahl 8 und eine Viskosität von 2300 mPa•s. Die Flushvorgänge verlaufen schnell. Es werden 91 % der eingesetzten Wassermenge abgeschieden. Nach Trocknung der Restfeuchte unter reduziertem Druck und gleichzeitigem Einsatz von 245 Teilen der obengenannten Flushharzlösung und zusätzlich 105 Teilen des genannten Mineralöls resultiert eine Flushpaste mit 41 % Pigmentgehalt, einer Viskosität von 98 Pa•s und einer Zügigkeit von 14,2 bis 14,7 Inkometerwerten. Gemischt mit einer Rußdruckfarbe analog Beispiel 1 resultiert eine Druckfarbe mit hervorragendem Glanz und Schönungsverhalten.

**Beispiele 5 bis 9**

Unter Verwendung eines Pigments der idealisierten Formel II (siehe Beispiel 1) und der in der Tabelle 1 angegebenen Komponenten der Flushharzlösung werden analog dem Verfahren von Beispiel 1 und den in der Tabelle angegebenen Bedingungen Flushpasten erhalten:

**Tabelle 1**

| Bsp. | Flushharzlösung aus | Säure-zahl | Viskosität [mPa.s] | Flush-dauer [h] | Wasserab-spaltung [%] | Trocken-zeit [h] | Pigment-gehalt Paste [%] | Viskosität Paste [Pa·s] | Zügigkeit Paste |
|---|---|---|---|---|---|---|---|---|---|
| 5 | Kolophoniumtrimethylolpropanester Mischalkyd (Ölgehalt ca. 78 %) Mineralöl Sd.-Ber. 260-290°C (Mengenverhältnis 2:4:5) | 9 | 470 | 1,5 | 92 | 3 | 43,2 | 44 | 12,3-12,8 |
| 6 | Kolophoniumneopentylolglykolester Mischalkyd (Ölgehalt ca. 84 %) Mineröl Sd.-Ber. 240-445°C (Mengenverhältnis 3:3:5) | 8 | 1050 | 1 | 89 | 3 | 43,0 | 56 | 13,1-13,4 |
| 7 | Kolophoniumglycerinester Mischalkyd (Ölgehalt ca. 84 %) Mineralöl Sd.-Ber. 240-445°C (Mengenverhältnis 4:2:5) | 7 | 960 | 1,5 | 86 | 4 | 42,8 | 75 | 11,8-12,1 |
| 8 | Kolophoniumdipentaerythritester Mischalkyd (Ölgehalt ca. 84 %) Mineralöl Sd.-Ber. 240-445°C (Mengenverhältnis 3:4:3) | 7 | 1000 | 1 | 92 | 3 | 42,8 | 87 | 12,4-12,6 |
| 9 | Kolophoniumpentaerythritester Mischalkyd (Ölgehalt ca. 84 %) Mineralöl Sd.-Ber. 240-445°C (Mengenverhältnis 4:2:6) | 7 | 1400 | 1 | 93 | 2,5-3 | 42,5 | 105 | 13,4-13,7 |

(Mischalkyd = Alkydharz 2 aus der DE-PS 23 54 225)

## Patentansprüche

**1.** Pigmentpräparation, enthaltend im wesentlichen

a) mindestens ein Pigment der allgemeinen Formel I,

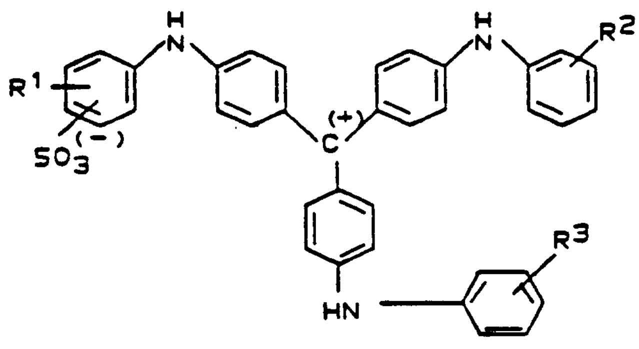

(I)

in welcher $R^1$, $R^2$ und $R^3$ unabhängig voneinander Wasserstoff, Chlor, Brom, $C_1$-$C_3$-Alkyl, $C_1$-$C_3$-Alkoxy oder Nitro bedeuten,
b) mindestens einen Naturharzester auf Basis von Naturharzen und ein- oder mehrwertigen Alkoholen mit 1 bis 20 C-Atomen
c) mindestens ein langöliges Alkydharz mit einem Ölgehalt von 60 bis 90 Gew. - % und
d) Mineralöl.

**2.** Pigmentpräparation nach Anspruch 1, gekennzeichnet durch einen Gehalt an
a) bis zu 50 Gew.-% Pigment der allgemeinen Formel I,
b) Naturharzester auf Basis von unmodifiziertem, disproportioniertem oder hydriertem Kolophonium und 2- bis 6-wertigem Alkohol mit 1 bis 10 C-Atomen,
c) langöligem Alkydharz mit einem Ölgehalt von 70 bis 85 Gew. - % und
d) Mineralöl mit einem Siedebereich zwischen 200 und 500 °C, wobei das Gewichtsverhältnis von Naturharzester b) zu Alkydharz c) von 1:0,25 bis 1:2,5 und das Gewichtsverhältnis der Summe der Harze b) + c) zum Mineralöl d) von 1:3 bis 1:0,5 beträgt.

**3.** Pigmentpräparation nach Anspruch 1 oder 2, gekennzeichnet durch ein Gewichtsverhältnis von Naturharzester b) zu Alkydharz c) von 1:0,35 bis 1:2 und ein Gewichtsverhältnis der Summe der Harze b)+c) zum Mineralöl d) von 1:2,7 bis 1:0,7.

**4.** Pigmentpräparation nach einem oder mehreren der Ansprüche 1 bis 3, gekennzeichnet durch einen Gehalt an Mineralöl d) mit einem Siedebereich zwischen 240 bis 450 °C.

**5.** Pigmentpräparation nach einem oder mehreren der Ansprüche 1 bis 4, gekennzeichnet durch einen Gehalt an einem Naturharzester b) auf Basis von Naturharz aus der Gruppe Balsamkolophonium, Wurzelharz, Tallharz und disproportioniertem oder hydriertem Kolophonium sowie Alkoholen aus der Gruppe Glycerin, Trimethylolpropan und Pentaerythrit.

**6.** Pigmentpräparation nach einem oder meheren der Ansprüche 1 bis 5, gekennzeichnet durch eine Viskosität im Bereich von 30 bis 70 Pa•s.

**7.** Pigmentpräparation nach einem oder mehreren der Ansprüche 1 bis 6, dadurch gekennzeichnet, daß die Naturharzester b) eine Säurezahl unter 30, vorzugsweise unter 20, und die Alkydharze c) eine Säurezahl unter 20, vorzugsweise unter 10, aufweisen.

**8.** Verfahren zur Herstellung der nach einem oder mehreren der Ansprüche 1 bis 7 definierten Pigmentpräparation, die im wesentlichen die obengenannten Komponenten a) bis d) enthält, durch Flushen der wäßrigen Preßkuchen der Pigmente der im Anspruch 1 dargelegten allgemeinen Formel I, dadurch gekennzeichnet, daß die wäßrigen Preßkuchen der Pigmente a) in Gegenwart einer Harzmischung aus mindestens einem Naturharzester b) und mindestens einem Alkydharz c) in Mineralöl d) geflusht werden.

**9.** Pigmentpräparation, erhältlich durch das Verfahren nach Anspruch 8.

**10.** Verwendung der nach einem oder mehreren der Ansprüche 1 bis 7 und 9 definierten Pigmentpräparation zur Herstellung von Druckfarben vorzugsweise für den Buch- und Offsetdruck.

## Claims

**1.** A pigment formulation containing essentially
a) at least one pigment of the general formula I

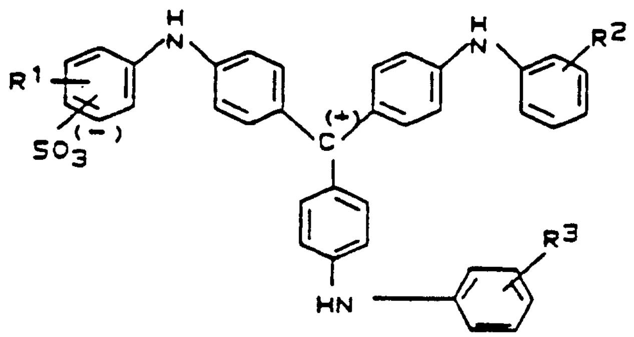

(I)

where $R^1$, $R^2$ and $R^3$ are each independently of the others hydrogen, chlorine, bromine, $C_1$-$C_3$-alkyl, $C_1$-$C_3$-alkoxy or nitro,
b) at least one natural resin ester based on natural resins and monohydric or polyhydric alcohols of 1 to 20 carbon atoms,
c) at least one long-oil alkyd resin having an oil content of from 60 to 90 % and
d) mineral oil.

**2.** The pigment formulation as claimed in claim 1 containing
a) up to 50 % by weight of pigment of the general formula I,
b) natural resin ester based on unmodified, disproportionated or hydrogenated rosin and 2- to 6-hydric alcohol of 1 to 10 carbon atoms,
c) long-oil alkyd resin having an oil content of 70 to 85 % and
d) mineral oil having a boiling range between 200 and 500 ° C,
the weight ratio of natural resin ester b): alkyd resin c) being from 1:0.25 to 1:2.5 and the weight ratio of the sum of resins b) + c): mineral oil d) being from 1:3 to 1:0.5.

**3.** The pigment formulation as claimed in claim 1 or 2 wherein the weight ratio of natural resin ester b):alkyd resin c) is from 1:0.35 to 1:2 and the weight ratio of the sum of resins b) + c): mineral oil d) is from 1:2.7 to 1:0.7.

**4.** The pigment formulation as claimed in one or more of claims 1 to 3 containing mineral oil d) having a boiling range between 240 and 450 ° C.

**5.** The pigment formulation as claimed in one or more of claims 1 to 4 containing a natural resin ester b) based on natural resin from the group consisting of balsam rosin, root resin, tall resin and disproportionated or hydrogenated rosin and also alcohols from the group consisting of glycerol, trimethylolpropane and pentaerythritol.

**6.** The pigment formulation as claimed in one or more of claims 1 to 5 having a viscosity within the range from 30 to 70 Pa.s.

**7.** The pigment formulation as claimed in one or more of claims 1 to 6 wherein the natural resin esters b) have an acid number of below 30, preferably below 20, and the alkyd resins c) have an acid number of below 20, preferably below 10.

**8.** A process for preparing the pigment formulation as claimed in one or more of claims 1 to 7, which contains essentially the abovementioned components a) to d), by flushing the aqueous presscakes of the pigments of the general formula I shown in claim 1, which comprises flushing the aqueous presscakes of pigments a) in the presence of a resin mixture of at least one natural resin ester b) and at least one alkyd resin c) in mineral oil d).

**9.** The pigment formulation obtainable by the process as claimed in claim 8.

**10.** The use of the pigment formulation as claimed in one or more of claims 1 to 7 and 9 for producing printing inks, preferably for letterpress and offset printing.

**Revendications**

**1.** Préparation pigmentaire, comportant essentiellement
a) au moins un pigment de formule générale I

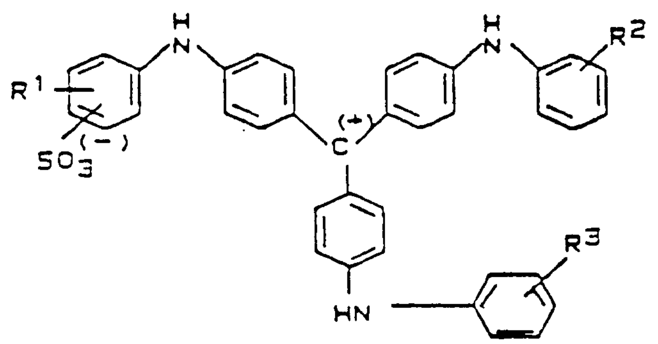

(I)

dans laquelle $R^1$, $R^2$ et $R^3$, indépendamment les uns des autres, représentent l'hydrogène, le chlore, le brome, un alkyle en $C_1$-$C_3$, un alcoxy en $C_1$-$C_3$ ou le nitro,
b) au moins un ester de résine naturelle à base de résines naturelles et d'alcools mono- ou multifonctionnels ayant de 1 à 20 atomes de C,
c) au moins une résine alkyde longue en huile ayant une teneur en huile de 60 à 90 % en poids, et
d) une huile minérale.

**2.** Préparation pigmentaire selon la revendication 1, caractérisée en ce qu'elle comporte
a) jusqu'à 50 % en poids de pigment de formule générale I,
b) un ester de résine naturelle à base de colophane non modifiée, disproportionnée ou hydrogénée et d'un alcool à 2 à 6 fonctions ayant de 1 à 10 atomes de C,
c) une résine alkyde longue en huile ayant une teneur en huile de 70 à 85 % en poids, et
d) une huile minérale ayant un domaine d'ébullition entre 200 et 500 °C, le rapport pondéral entre l'ester de résine naturelle b) et la résine alkyde c) étant de 1:0,25 à 1:2,5 et le rapport pondéral entre la somme des résines b) + c) et l'huile minérale d) étant de 1:3 à 1:0,5.

**3.** Préparation pigmentaire selon la revendication 1 ou 2, caractérisée en ce que le rapport pondéral entre l'ester de résine naturelle b) et la résine alkyde c) est de 1:0,35 à 1:2, et le rapport pondéral entre la somme des résines b) + c) et l'huile minérale d) est de 1:2,7 à 1:0,7.

**4.** Préparation pigmentaire selon une ou plusieurs des revendications 1 à 3, caractérisée en ce qu'elle contient une huile minérale d) ayant un domaine d'ébullition entre 240 et 450 °C.

**5.** Préparation pigmentaire selon une ou plusieurs des revendications 1 à 4, caractérisée en ce qu'elle contient un ester de résine naturelle b) à base de résine naturelle choisie dans le groupe formé par la colophane de baume, la résine d'essence de bois, la résine d'huile de pin et la colophane disproportionnée ou hydrogénée ainsi qu'à base d'alcools choisis dans le groupe formé par la glycérine, le triméthylolpropane et la pentaérythrite.

**6.** Préparation pigmentaire selon une ou plusieurs des revendications 1 à 5, caractérisée en ce qu'elle a une viscosité dans le domaine de 30 à 70 Pa.s.

**7.** Préparation pigmentaire selon une ou plusieurs des revendications 1 à 6, caractérisée en ce que l'ester de résine naturelle b) a un indice d'acidité inférieur à 30, de préférence inférieur à 20, et la résine alkyde c) a un indice d'acidité inférieur à 20, de préférence inférieur à 10.

**8.** Procédé pour préparer la préparation pigmentaire définie par une ou plusieurs des revendications 1 à 7, qui comporte essentiellement les composants précités a) à d), par flushing des gâteaux humides de pressage des pigments de formule générale I donnée à la revendication 1, caractérisé en ce que les gâteaux humides de pressage des pigments a) sont flushés en présence d'un mélange de résines comportant au moins un ester de résine naturelle b) et au moins une résine alkyde c) dans une huile minérale d).

**9.** Préparation pigmentaire pouvant être obtenue par le procédé selon la revendication 8.

**10.** Utilisation de la préparation pigmentaire définie par une ou plusieurs des revendications 1 à 7 et 9, pour préparer des encres d'impression, de préférence pour l'impression par typographie et par offset.